# EUROPÄISCHE PATENTSCHRIFT

(11) **EP 0 783 714 B1**
(45) Veröffentlichungstag und Bekanntmachung des Hinweises auf die Patenterteilung: **28.11.2001**
(21) Anmeldenummer: 95931900.5
(22) Anmeldetag: 21.09.1995
(51) Int. Cl.: G02B 6/42, G02B 6/30

(54) **KOPPELANORDNUNG ZUM OPTISCHEN ANEINANDERKOPPELN EINES OEIC-BAUSTEINS UND OPTISCHER FASERN**
OPTICAL COUPLER DESIGNED TO COUPLE AN OEIC MODULE TO OPTICAL FIBRES
COUPLEUR POUR LE COUPLAGE OPTIQUE D'UN MODULE OEIC A DES FIBRES OPTIQUES

(30) Priorität: 26.09.1994 DE 4434339
(43) Veröffentlichungstag der Anmeldung: 16.07.1997
(73) Patentinhaber: Infineon Technologies AG, 81669 München (DE)
(72) Erfinder: ACKLIN, Bruno, D-93059 Regensburg (DE); BELLERMANN, Jan, D-85598 Baldham (DE); SCHIENLE, Meinrad, D-81735 München (DE); HONSBERG, Martin, D-83359 Hufschlag (DE); MÜLLER, Gustav, D-80993 München (DE)
(74) Vertreter: Zedlitz, Peter, Dipl.-Inf.
(86) Internationale Anmeldenummer: DE9501303
(87) Internationale Veröffentlichungsnummer: WO9610199

(56) Entgegenhaltungen:
- EP-A- 0 264 108
- EP-A- 0 532 470
- EP-A- 0 569 981
- WO-A-93/15424
- DE-A- 3 608 018
- DE-A- 4 013 630
- PATENT ABSTRACTS OF JAPAN vol. 13 no. 536 (P-975) ,14.Dezember 1989 & JP,A,01 234806 (SUMITOMO)

## Beschreibung

Aus W. Hunziker, W. Vogt and H.Melchior: "Self-aligned optical flip-chip OEIC packaging technologies" in Proceedings ECOC'93 (Montreux, Switzerland), Vol. 1, Seiten 84 bis 91 ist eine Koppelanordnung zum selbstjustierenden optischen Aneinanderkoppeln optischer Ein- und/oder Ausgänge eines OEIC-Bausteins und Stirnflächen optischer Fasern bekannt.

Bei dieser bekannten Koppelanordnung sind die Ein- und/oder Ausgänge des OEIC-Bausteins in zumindest einer ebenen Endfläche des Bausteins auf einer geraden Linie nebeneinander angeordnet. Die Fasern sind auf einem Trägerkörper in Nuten angeordnet und gehaltert und die den Ein- oder Ausgängen individuell zugeordneten Stirnflächen dieser Fasern sind gleich orientiert in einer gemeinsamen Ebene auf einer geraden Linie nebeneinander angeordnet.

Der OEIC-Baustein weist eine zu dessen Endfläche senkrechte und zur geraden Linie der Ein- und/oder Ausgänge parallele Oberfläche auf.

Der Trägerkörper weist eine zur Ebene der Stirnflächen senkrechte und zu deren gerader Linie parallele Oberfläche auf, in der die Nuten angeordnet sind.

Der OEIC-Baustein ist auf dem Trägerkörper so angeordnet, daß seine ebene Oberfläche der ebenen Oberfläche des Trägerkörpers zugekehrt ist.

Zur Anordnung des OEIC-Bausteins auf dem Trägerkörper sind auf der ebenen Oberfläche des Bausteins ein oder mehrere Vorsprünge ausgebildet, deren jeder einer Nut des Trägerkörpers zugeordnet ist. Der Baustein wird so auf den Trägerkörper aufgesetzt, daß der oder die Vorsprünge in die zugeordneten Nuten ragen und an einander gegenüberliegenden und schräg in einem Winkel zueinander stehenden seitlichen Begrenzungsflächen der Nuten anstehen, wobei die ebene Oberfläche des Bausteins in einem Abstand von der ebenen Oberfläche des Trägerkörpers angeordnet ist.

Es ist so eingerichtet, daß bei dem derart auf den Trägerkörper aufgesetzten Baustein die einander zugeordneten Stirnflächen der optischen Fasern und die Ein- und/oder Ausgänge des Bausteins von selbst in der richtigen Lage zueinander angeordnet sind, d.h. koaxial einander gegenüberliegen.

Zur elektrischen Kontaktierung des OEIC-Bausteins sind federnd auf der ebenen Oberfläche des Trägerkörpers aufgelötete elektrische Kontakte vorgesehen.

Aus EP A 532 470 ist eine Koppelanordnung zum selbstjustierenden optischen Aneinanderkoppeln optischer Ein- und Ausgänge eines OEIC-Bausteins und Stirnflächen optischer Fasern bekannt. Die optischen Fasern sind in nebeneinander verlaufenden Nuten eines Trägerkörpers angeordnet. Der Baustein liegt auf einer zu den Stirnflächen der Fasern senkrechten und zu einer Verbindungslinie der Faserkerne parallelen Auflagefläche des Trägerkörpers. Die Ein- und Ausgänge des Bausteins sind in einer ebenen Endfläche des Bausteins angeordnet, die senkrecht zur Auflagefläche des Bausteins liegt. Die Selbstjustierung wird ermöglicht durch einen Vorsprung des Bausteins, der in eine entsprechende Vertiefung des Trägers paßt. Eine ähnliche Koppelanordnung ist in JP-A-1-234806 beschrieben.

Da die Nuten aufgrund der Abmessungen der Fasern relativ flach sind, weisen die bisher bekannten Koppelanordnungen den Nachteil auf, daß ein Befestigen der Fasern in den Nuten mittels Klebstoff Schwierigkeiten bereiten. In die Nuten eingebrachter Klebstoff kann leicht überfließen. Es ist auch eine genaue Plazierung des Klebstoffs in jeder einzelnen Nut erforderlich.

Der Erfindung liegt die Aufgabe zugrunde, eine Koppelanordnung bereit zu stellen, die ein leichteres Befestigen der Fasern in den Nuten mittels Klebstoff ermöglicht.

Die Aufgabe wird gelöst durch eine Koppelanordnung nach Anspruch 1. Da der quer zu den Nuten verlaufende Graben tiefer als die Nuten ist, bewirkt der Graben ein automatisches Einziehen und gleichmäßiges Verteilen des Klebstoffs durch Kapillarkräfte.

Der OEIC-Baustein weist eine ebene Auflagefläche und der Trägerkörper weist eine ebene Lagerfläche auf, auf der die Auflagefläche des Bausteins flach aufliegt. Das flache Aufliegen des Bausteins auf dem Trägerkörper benötigt eine weniger genaue Vorpositionierung, ist sehr stabil, und die Lage des optischen Feldes relativ zur Lagerfläche kann sehr genau eingestellt werden.

Bevorzugte und vorteilhafte Ausgestaltungen der erfindungsgemäßen Koppelanordnung nach Anspruch 1 sind in den Anspüchen 2 bis 5 angegeben.

Die andersartige elektrische Kontaktierung wird durch eine erfindungsgemäße Koppelanordung nach Anspruch 6 erreicht. Wesentlich ist, daß die elektrische Kontaktierung von der Rückseite des Trägerkörpers her erfolgt, wodurch eine unkomplizierte Kontaktierungsmöglichkeit mittels Wirebonding ermöglicht ist. Die erfindungsgemäße Kontaktierungsmöglichkeit ist nicht auf Koppelanordnungen nach den Ansprüchen 1 bis 5 beschränkt, sondern generell bei optischen Koppelanordnungen anwendbar.

Für die Koppelanordnung nach den Ansprüchen 1 bis 5 vorteilhafte aber nicht auf diese Anordnungen beschränkte vorteilhafte Trägerkörper mit Nuten, in denen Fasern anzuordnen und zu befestigen sind, gehen aus den Ansprüchen 7 bis 14 hervor.

Die Erfindung wird in der nachfolgenden Beschreibung anhand der Figuren beispielhaft näher erläutert. Es zeigen:
- Figur 1: eine Draufsicht auf einen Trägerkörper einer erfindungsgemäßen selbstjustierenden Koppelanordnung mit Rückseitenkontaktierung, bei welchem die Lage des OEIC-Bausteins gestrichelt eingezeichnet ist,
- Figur 2: eine Draufsicht auf ein Beispiel eines OEIC-Bausteins, auf dessen Unterseite vier schaltbare optische Richtkoppler ausgebildet sind,
- Figur 3: eine Draufsicht auf eine Endfläche des Bausteins nach Figur 2,
- Figur 4: einen Ausschnitt aus einem längs der Schnittlinie I-I in Figur 1 genommenen Querschnitt senkrecht zur Lagerfläche des Trägerkörpers in vergrößerter Darstellung, wobei die Besonderheit vorliegt, daß für die erfindungsgemäße Anschlageinrichtung gesonderte Nuten vorgesehen sind,
- Figur 5: einen längs der Schnittlinie III-III in Figur 1 genommenen Längsschnitt durch den Trägerkörper vertikal zur Lagerfläche, wobei der OEIC-Baustein nach den Figuren 2 und 3 aufgesetzt und elektrisch kontaktiert ist,
- Figur 6: einen einem Querschnitt längs der Schnittlinie II-II in Figur 1 entsprechenden Querschnitt durch einen Trägerkörper vertikal zu dessen Lagerfläche, wobei dieser Schnitt längs eines die Nuten des Trägerkörpers quer durchtrennenden Grabens zum Einbringen eines Klebstoffs zum Befestigen der Fasern in den Nuten geführt ist,
- Figur 7: einen dem Querschnitt nach Figur 6 entsprechenden Querschnitt durch einen Trägerkörper und durch einen Fasern haltenden Hilfsträgerkörper, der auf den Trägerkörper so aufzusetzen ist, daß die Fasern in den Nuten des Trägerkörpers angeordnet sind, und
- Figuren 8a und 8b: auschnitthaft eine durchgehende bzw. in Abschnitte unterteilte Nut in der Oberfläche eines Trägerkörpers und eine Maske bzw. Maskenabschnitte, die in einem Winkel zur Nut bzw. den Nutenabschnitten verläuft.

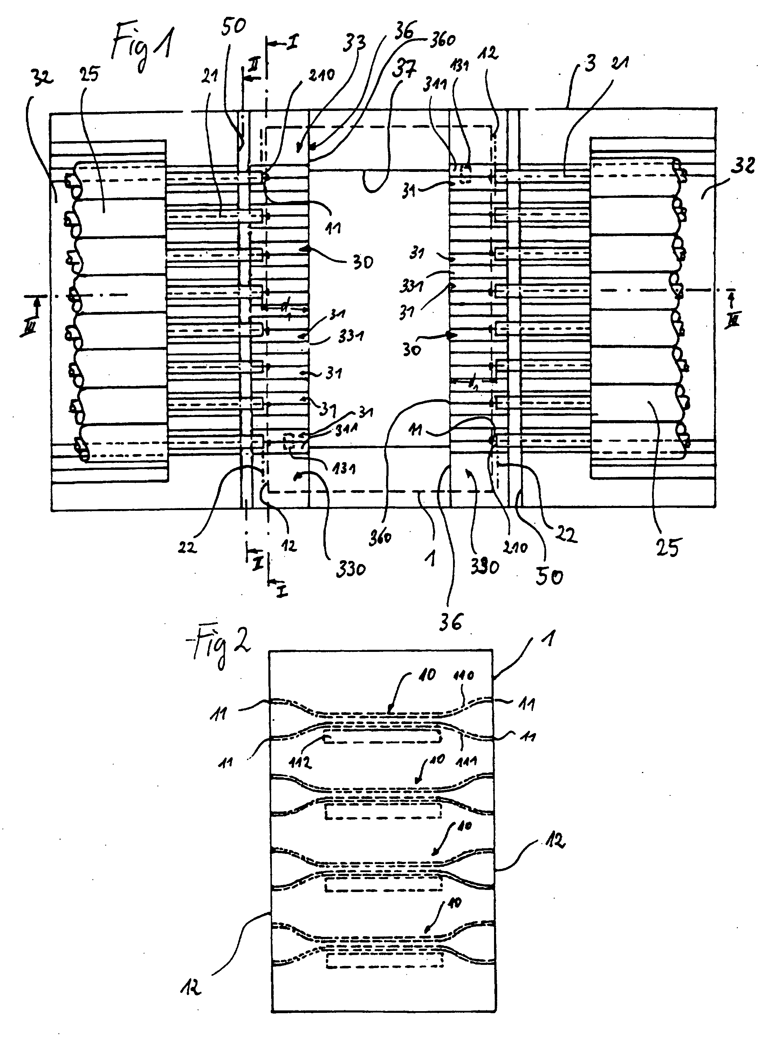

Der in Figur 1 in Draufsicht dargestellte Trägerkörper 3 einer erfindungsgemäßen Koppelanordnung zum selbstjustiereneden optischen Aneinanderkoppeln optischer Ein- und/oder Ausgänge eines OEIC-Bausteins und Stirnflächen optischer Fasern weist eine beispielsweise in der Zeichenebene liegende ebene Lagerfläche 33 auf, die z. B. aus zwei durch eine Vertiefung 36 des Trägerkörpers 3 voneinander getrennte Lagerflächenabschnitte 330 besteht.

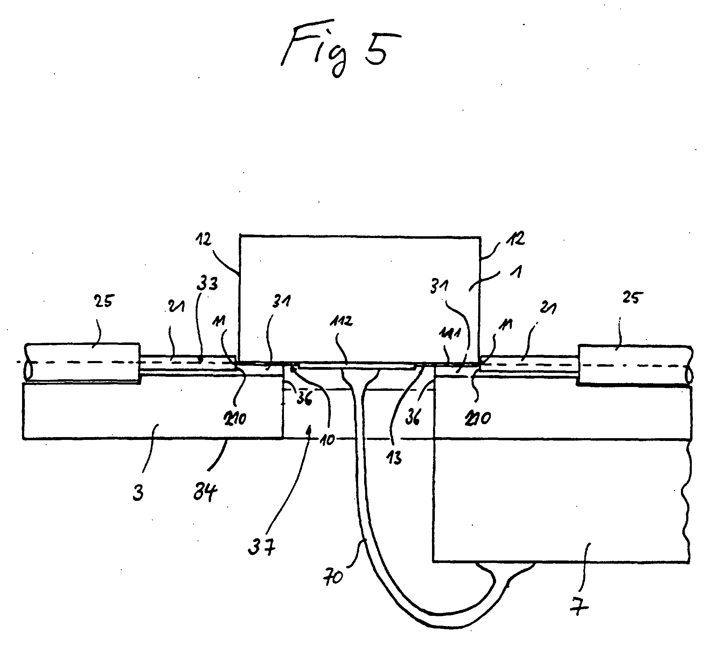

In jedem Lagerflächenabschnitt 330 ist eine Reihe 30 aus parallel nebeneinander verlaufenden Nuten 31 ausgebildet, in denen zu koppelnde Fasern 21 derart angeordnet und gehaltert sind, daß Stirnflächen 210 dieser Fasern 21 gleich orientiert in einer gemeinsamen, zur Ebene der Lagerfläche 33 senkrechten Ebene 22 auf einer geraden Linie 220 (siehe z.B. Figur 4) nebeneinander angeordnet sind.

Die Stirnflächen 210 der Fasern jedes Lagerflächenabschnitts 330 sind in einem Abstand d₁ von einer diesen Lagerflächenabschnitt 330 begrenzenden und beispielsweise zur geraden Linie 220 der Stirnflächen 210 parallelen Randkante 360 der Vertiefung 36 angeordnet. Die Nuten 31 dieses Lagerflächenabschnitts 330 erstrecken sich bis zu dieser Randkante 360.

Jeder Lagerflächenabschnitt 330 umfaßt ebene Flächenstreifen 331, die in der Zeichenebene liegen und benachbarte Nuten 31 voneinander trennen.

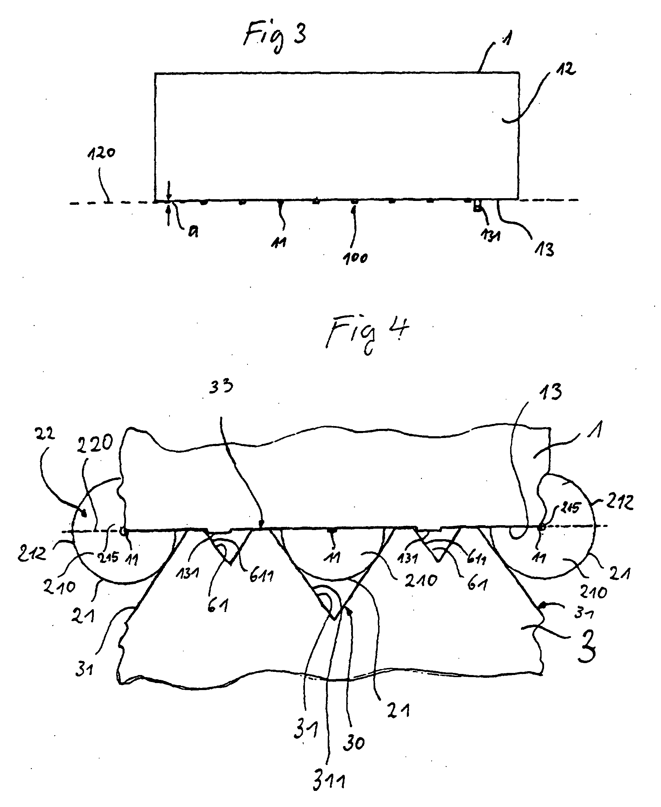

Ein OEIC-Baustein 1 ist mit seiner Auflagefläche 13 (siehe Figuren 3 und 5) flach auf die Lagerfläche 33 so aufzusetzen, wie es in der Figur 1 gestrichelt angedeutet ist. Dies bedeutet, daß der zwei einander gegenüberliegende Endflächen 12 aufweisende Baustein 1 mit seiner Auflagefläche 13 so auf die Lagerfläche 33 flach aufzulegen ist, daß ein an eine Endfläche 12 angrenzender Abschnitt dieser Auflagefläche 13 auf einem zugeordneten Lagerflächenabschnitt 330 und ein an die andere Endfläche 12 angrenzender Abschnitt der Auflagefläche 13 auf dem anderen Lagerflächenabschnitt 330 flach aufliegt.

Die zur Auflagefläche des Bausteins 1 senkrechten und zueinander parallelen Endflächen 12 stehen bei dem derart auf dem Trägerkörper 3 aufliegenden Baustein 1 senkrecht zur Lagerfläche 33 des Trägerkörpers 3.

Der Baustein 1 ist überdies so anzuordnen, daß jede Endfläche 12 parallel zur Ebene 22 ist, in der die dieser Endfläche 12 zugeordneten und gegenüberliegenden Faserenden 210 liegen.

Außerdem ist der Baustein 1 so anzuordnen, daß jedem Faserende 210 ein sich in der diesem Faserende 210 zugeordneten Endfläche 12 dieses Bausteins 1 befindender Ein- und/oder Ausgang 11 genau gegenüberliegt.

Dies wird erfindungsgemäß durch eine Anschlageinrichtung erreicht, mit der eine relative Verschiebung zwischen dem mit seiner Auflageflache 13 flach auf der Lagerfläche 33 aufliegenden OEIC-Bauteil 1 und dem Trägerkörper 3 in Richtung parallel zur Ebene 22 der zugeordneten Faserstirnflächen 210 und zur Lagerfläche 33 an einer Stelle begrenzbar ist, bei der sich einander zugeordnete Stirnflächen 210 und Ein- und/oder Ausgänge 11 gegenüberliegen.

Dabei ist vorausgesetzt, daß die in einer Endfläche 12 angeordneten Ein- und/oder Ausgänge 11 des OEIC-Bausteins 1 auf einer zu dessen Auflagefläche 13 parallelen geraden Linie 120 (siehe Figur 3) nebeneinander angeordnet sind und der vertikale Abstand a dieser geraden Linie 120 von der Auflagefläche 13 gleich dem vertikalen Abstand b der geraden Linie 220 der Stirnflächen 210 von der Lagerfläche 33 des Trägerkörpers 3 ist.

Die Anschlageinrichtung besteht beispielsweise aus einer Nut 31 und einem Vorsprung 131, der auf der Auflagefläche 13 des Bausteins 1 ausgebildet ist und mit Spiel in diese Nut 31 paßt. Dieser Anschlag 131 ist relativ zur Nut derart bemessen und angeordnet, daß bei einer relativen Verschiebung von Baustein 1 und Trägerkörper 3 parallel zu den Ebenen 22 der Stirnflächen 210 der Fasern 21 dieser Anschlag 131 in Kontakt mit einer seitlichen Begrenzungsfläche 311 dieser Nut 31 kommt und dabei die Relativbewegung an einer Stelle stoppt, bei der die Ein- und/oder Ausgänge 11 des Bausteins 1 jeweils genau einer Stirnfläche 210 einer zugeordneten Faser 21 gegenüberliegen.

In den Figuren 2 und 3 ist ein Beispiel eines OEIC-Bausteins 1 in Draufsicht von oben bzw. auf eine Endfläche dargestellt. Bei diesem Beispiel ist die Auflagefläche 13 die Unterseite des Bausteins 1.

Bei diesem Baustein1 sind beispielsweise auf der Auflagefläche 13 vier allgemein bekannte schaltbare optische Richtkoppler 10 ausgebildet, die in der Figur 2, da sie sich auf der von der Oberseite abgekehrten Unterseite des Bausteins 1 befinden, zusammen mit je einer jedem Richtkoppler 10 zugeordneten Steuerelektrode 112 gestrichelt dargestellt sind.

Jeder Richtkoppler 10 besteht aus zwei auf dem Baustein 1 integrierten optischen Streifenwellenleitern110 und 111, die in den beiden einander gegenüberliegenden Endflächen 12 des Bausteins 1 enden und in einem Mittelabschnitt in einem derart geringen Abstand parallel nebeneinander verlaufen, daß eine in einem dieser beiden Wellenleiter 110 und 111 geführte optische Welle in den anderen Wellenleiter überkoppeln kann, wobei die Überkopplung in Abhängigkeit von einer Steuerspannung, die an eine in diesem Mittelabschnitt neben den Wellenleitern 110 und 111 angeordnete Steuerelektrode 112 anzulegen ist, überkoppeln kann.

Jede in einer der beiden Endflächen 12 des Bausteins 1 liegende Stirnfläche eines Streifenwellenleiters 110 und 111 definiert einen Ein- und/oder Ausgang 11 des Bausteins 1. Diese Stirnflächen 11 sind auf der zur Auflagefläche 13 und zur betreffenden Endfläche 12 parallelen Linie 120 angeordnet. Der vertikale Abstand a dieser Linie 120 von der Auflagefläche 13 ist, da sich die Streifenwellenleiter 110 und 111 unmittelbar auf dieser Auflagefläche 13 befinden, sehr klein und befindetsich im Mikrometer- oder Submikrometerbereich . Der Abstand a könnte prinzipiell auch 0 sein.

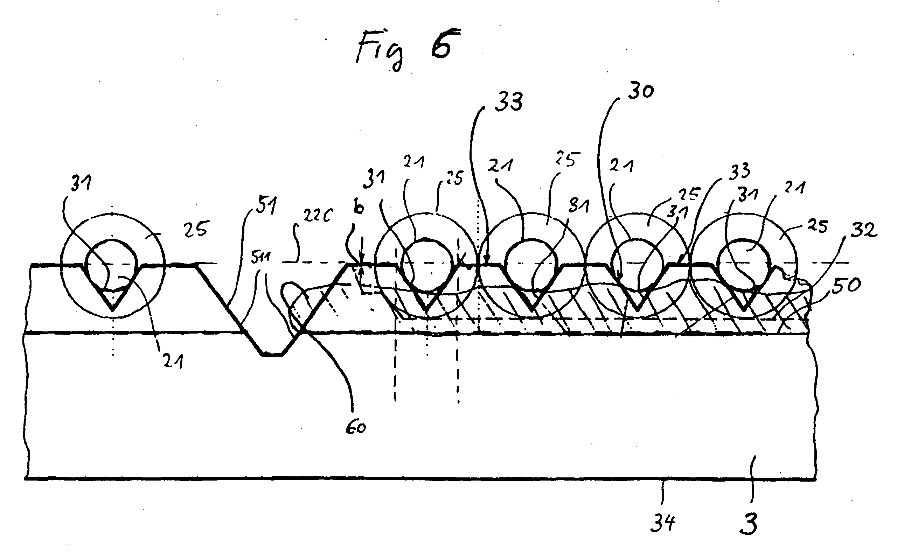

Wesentlich im Hinblick auf eine genaue Justierung der Ein- und Ausgänge 11 und Stirnflächen 210 der Fasern 21 relativ zueinander ist, daß der Abstand b der Linie 220 (siehe Figur 6), auf der sich die zentralen Achsen der Fasern 21 in den Stirnflächen 210 dieser Fasern befinden, von der Lagerfläche 33 des Trägerkörpers 3 gleich dem Abstand a ist, da dann beim beschriebenen flachen Aufsetzen des Bausteins 1 auf den Trägerkörper 3 diese beiden Linien 120 und 220 auf gleicher Höhe in Bezug auf die Lagerfläche 33 liegen.

Ist der Baustein 1 in der beschriebenen Weise auf den Trägerkörper 3 aufgebracht worden und bis zum Anlegen des Vorsprungs 131 an einer seitlichen Begrenzungsfläche 311 der zugeordneten Nut 31 gebracht worden, sind die einander zugeordneten Ein- und/oder Ausgänge 11 und Stirnflächen 210 von selbst justiert und der Baustein 1 kann auf dem Trägerkörper 3 in dieser Lage fixiert werden.

Zur Kontaktierung des auf dem Trägerkörper 3 fixierten Bausteins 1 ist im Tragerkörper eine durchgehende Öffnung 37 vorgesehen, die sich im Bereich des Bausteins 1, beispielsweise im Bereich der Vertiefung 36 bis zu einer vom Baustein 1 abgekehrten Rückseite 34 des Trägerkörpers 3 erstreckt, und durch die der Baustein 1 von dieser Rückseite 34 her elektrisch kontaktierbar ist, beispielsweise durch Wirebonding.

In dem in der Figur 5 gezeigten Längsschnitt ist beispielsweise eine Elektrode 112 eines Richtkopplers 10 durch einen Bonddraht 70 mit einer Verdrahtungsplatte 7 elektrisch verbunden, auf welcher beispielsweise der Trägerkörper 3 angeordnet ist.

Ein Vorsprung 131 auf der Auflagefläche 13 eines Bausteins 1 kann in einer Nut 31, in der eine Faser 21 gehaltert ist, angeordnet werden, so wie es in der Figur 1 angedeutet ist. Im Hinblick auf eine ungestörte Lichtausbreitung zwischen einer Stirnfläche 210 einer Faser 21 und eines zugeordneten Ein- und/oder Ausgangs 11 ist es jedoch zweckmäßig, einen solchen Vorsprung 131 in einer gesonderten Nut 61 anzuordnen, in der keine Faser 21 angeordnet und gehaltert ist. Eine solche Nut 61 kann beispielsweise zwischen benachbarten Nuten 31 angeordnet sein und kleinere Querschnittsabmessungen als diese Nuten 31 aufweisen. Wesentlich ist nur, daß der Vorsprung 131 mit Spiel in diese Nut 61 paßt und durch Verschieben in Kontakt mit einer seitlichen Begrenzungsfläche 611 dieser Nut 61 bringbar ist.

Zur Befestigung der Fasern 21 in die Nuten 31 des Trägerkörpers 3 ist in der Lagerfläche 33 ein die Nuten 31 quer durchtrennender Graben 50 zum Einbringen eines Klebstoffs 60 (siehe Figur 6) zum Befestigen der Fasern 21 in die Nuten 31 ausgebildet, der sich von der Lagerfläche 33 in eine größere Tiefe t₂ als die Nuten 31 erstreckt, die eine kleinere Tiefe t₁ aufweisen. Ein solcher Graben 50 erlaubt ein automatisches Einziehen und gleichmäßiges Verteilen des Klebstoffs 60 durch Kapillarkräfte. Der Klebstoff 60 kann beispielsweise ein Epoxykleber sein. Der Graben 50 selbst kann durch Sägen erzeugt sein.

Zweckmäßig ist es auch, wenn in der Lagerfläche 33 zumindest ein sich zwischen benachbarten Nuten 31 und quer zum Graben 50 erstreckender weiterer Graben 51 ausgebildet ist, in den der eine Graben 50 mündet und der sich von der Oberfläche 33 in eine größere Tiefe t₃ als der eine Graben 50 erstreckt. Ein solcher weiterer Graben verhindert ein Überfließen des Klebstoffs 60 zu jenseits dieses weiteren Grabens liegenden Nuten 31, in denen zwar Fasern 21 zu befestigen sind, beispielsweise jedoch nicht gleichzeitig mit den diesseits des weiteren Grabens 51 zu befestigenden Fasern 21.

Ein weiterer Graben 51 kann auch dazu dienen, Trägerkörperabschnitte voneinander zu trennen, die parallele Nuten 31 zum Befestigen von Fasern 21 aufweisen und die von diesem Trägerkörper im Bereich des weiteren Grabens 51 abgetrennt werden, um Trägerkörper 3 nach Figur 1 zu bilden.

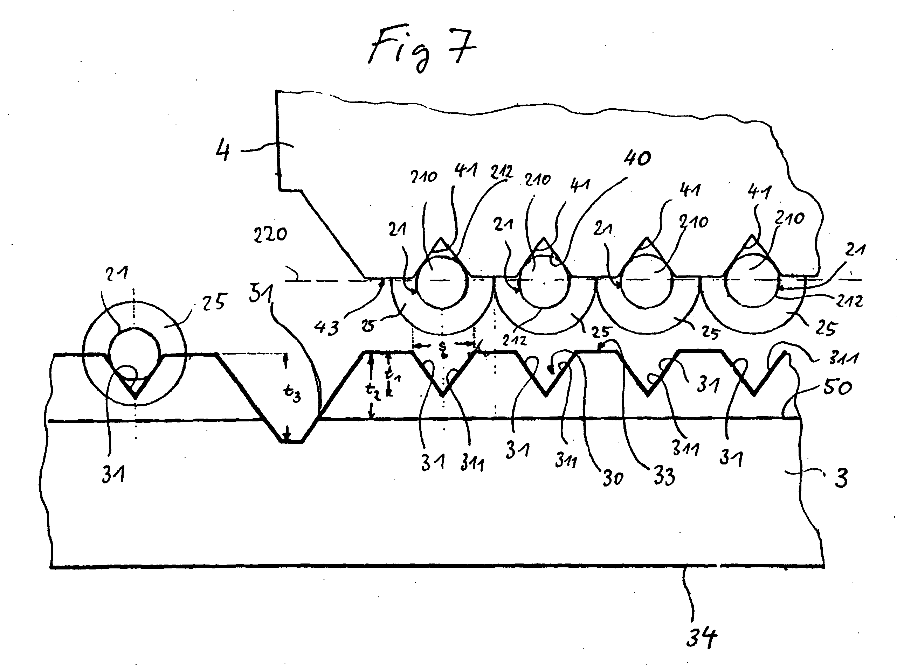

Zweckmäßig ist es vielfach auch, die Fasern 21 in Nuten 41 eines Hilfsträgerkörpers 4 anzuordnen und zu befestigen, die in einer ebenen Oberfläche 43 des Hilfsträgerkörpers 4 derart ausgebildet und bemessen sind, daß die in diesen Nuten 41 angeordneten Fasern 21 mit ihrer Umfangsfläche 212 seitliche Begrenzungsflächen 411 dieser Nuten 41 berühren und aus der ebenen Oberfläche 43 des Hilfsträgers 4 ragen, so wie es in der Figur 7 dargestellt ist.

Die Nuten 41 des Trägerkörpers 4 sind mit den in einer Ebene angeordneten Nuten 31 des Trägerkörpers 3 derart zur Deckung bringbar, daß jede Faser 21 in einer zugeordneten Nut 31 des Trägerkörpers 3 mit ihrer Umfangsfläche 212 in diese Nut 31 ragt und die seitlichen Begrenzungsflächen 311 dieser Nut 31 berührt. Der Hilfsträgerkörper 4 kann identisch zum Trägerkörper 3 ausgebildet sein und ein von einem größeren Trägerkörper in einem weiteren Graben 51 abgetrennter Abschnitt dieses Trägerkörpers sein. Dementsprechend kann auch der Hilfsträgerkörper 4 einen Graben 50 zum Einbringen eines Klebstoffs aufweisen.

Die getrennte Vormontage der Fasern 21 auf einem Hilfsträger 4 erhöht die Ausbeute und erlaubt eine beidseitige Fixierung der Fasern 21.

Sämtliche Nuten 31, 41 und 61 und auch der weitere Graben 51 sind vorzugsweise so ausgebildet, daß sie jeweils schräg in einem Winkel zueinander angeordnete, sich gegenüberliegende seitliche Begrenzungsflächen 311, 411, 611 bzw. 511 aufweisen. Derartige Begrenzungsflächen werden beispielsweise bei der Herstellung von Nuten durch Vorzugsätzen in Silizium erhalten. Dementsprechend besteht der Trägerkörper 3 vorzugsweise aus Silizium, während der Baustein 1 vorzugsweise ein Substrat aus elektrooptischem Material, beispielsweise InP, aufweist.

Eine Nut mit schräg in einem Winkel zueinander angeordneten seitlichen Begrenzungsflächen kann V-förmig oder U-förmig sein.

Bei einem realisierten Ausführungsbeispiel eines Trägerkörpers 3 bzw. Hilfsträgerkörpers 4 aus Silizium für eine erfindungsgemäße Koppelanordnung, bei dem die V- oder U-förmigen Nuten 31 bzw. 41 und der weitere Graben 51 durch anisotropes Ätzen hergestellt wurden, hatten die Nuten 31 bzw. 41 ein Öffnungsbreite s von etwa 153 µm und eine Tiefe t₁ von etwa 108 µm und der weitere Graben eine Tiefe t₃ von etwa 150 µm. Der gesägte Graben 50 hatte eine Tiefe t₂ von etwa 130 µm. Die Fasern 21 waren bekannte Monomode-Glasfasern mit einem typischen Durchmesser von 3 bis 8 µm des Kerns 215 (siehe Figur 4) und einem Durchmesser von typischerweise 100 bis 150 µm des Mantels 212.

Die zu befestigenden Fasern 21 sind üblicherweise von einem Schutzmantel 25 umgeben. Dieser Schutzmantel 25 ist im Bereich der Nuten 31 von der Faser 21 entfernt. Um die von ihrem Schutzmantel 25 befreiten, brüchigen Fasern 21 nicht mechanisch zu belasten, ist auf der vom Baustein 1 abgekehrten Seite der Nuten 31 eine sich quer zu den Nuten 31 erstreckende wannenartige Vertiefung 32 zur Aufnahme und Befestigung der mit dem Schutzmantel 25 ummantelten Fasern 21 vorgesehen, in welcher der Schutzmantel 25 Platz findet und beispielsweise mit Klebstoff verankert werden kann. Bei dem realisierten Ausführungsbeispiel war die Vertiefung 32 etwa 150 µm tief.

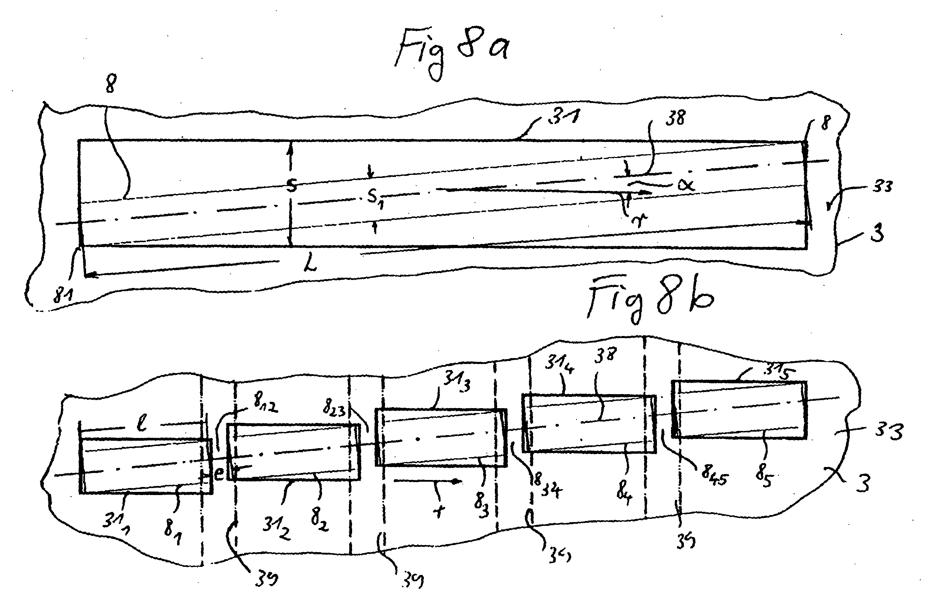

Liegt beim Vorzugsätzen der Nuten 31, 41 oder 61 die streifenförmig langgestreckte Maske nicht parallel zur Kristallachse des Siliziums, kann es beim Vorzugsätzen langer Nuten zu einer Verbreiterung kommen, wie es in der Figur 8a am Beispiel einer Nut 31 angedeutet ist. Die Maske 8 der Breite s₁ und der Länge L ist in einem Winkel α zur Richtung r, in der sich die Nut 31 beim Vorzugsätzen der Oberfläche 33 des Trägerkörpers 3 aus Silizium ausbildet. Die Öffnungsbreite s dieser Nut 31 ist durch den zur Richtung r senkrecht gemessenen Abstand zwischen der linken unteren Ecke 81 und der rechten oberen Ecke 83 der Maske 8 bestimmt. Je länger die Länge L der Maske 8 ist, desto größer ist die Breite s der entstehenden Nut 31.

Um die Breite s der Nut 31 klein zu halten, wird keine durchgehende Maske 8 verwendet, sondern eine ein- oder mehrfach unterbrochene Maske nach Figur 8b, die aus in Richtung der zentralen Achse 38 mit Abstand e hintereinander angeordneten Maskenabschnitten 8₁, 8₂, 8₃, 8₄ und 8₅ besteht. Jeder dieser Maskenabschnitte 8₁ bis 8₅ erzeugt einen Nutabschnitt 31₁, 31₂, 31₃, 31₄ bzw. 31₅, der wegen der kurzen Länge 1 dieses Maskenabschnitts eine geringere Breite s aufweist, als die durch die lange Maske 8 nach Figur 8a erzeugte Nut 31.

Die erzeugten Nutabschnitte 31₁ bis 31₅ sind in der Richtung r aufeinanderfolgend und seitlich parallel gegeneinander versetzt angeordnet und auf der zentralen Achse 38 der Maskenabschnitte 8₁ bis 8₅ angeordnet, die in einem Winkel α zur Richtung r verläuft. Benachbarte Nutabschnitte 8₁ und 8₂ bzw. 8₂ und 8₃ bzw. 8₃ und 8₄ bzw. 8₄ und 8₅ sind durch quer zu den Nutabschnitten verlaufende Stege 8₁₂, 8₂₃, 8₃₄ bzw. 8₄₅. Um eine Faser 21 einlegen zu können, werden benachbarte Nutabschnitte 8₁ und 8₂ bzw. 8₂ und 8₃ bzw. 8₃ und 8₄ bzw. 8₄ und 8₅ durch eine dazwischenliegende, quer zur Richtung r und zur Achse 38 verlaufende grabenartige Vertiefung 39, welche die Stege 8₁₂, 8₂₃, 8₃₄ bzw. 8₄₅ beseitigt und die in der Figur 8b gestrichelt angedeutet ist, voneinander getrennt. Eine derartige grabenartige Vertiefung 39 kann durch Sägen erzeugt werden.

## Patentansprüche

1. Koppelanordnung zum selbstjustierenden optischen Aneinanderkoppeln optischer Ein- und/oder Ausgänge (11) eines OEIC-Bausteins (1) und Stirnflächen (210) optischer Fasern (21), wobei die Ein- und/oder Ausgänge (11) des Bausteins (1) in einer ebenen Endfläche (12) dieses Bausteins (1) auf einer geraden Linie (120) nebeneinander angeordnet sind und der Baustein (1) eine Auflagefläche (13) aufweist, die zur Endfläche (12) des Bausteins (1) senkrecht und zur geraden Linie (120), auf der die Ein- und/oder Ausgänge (11) des Bausteins (1) angeordnet sind, parallel ist, wobei die Anordnung aufweist
- einen Trägerkörper (3, 4) mit
- einer ebenen Oberfläche in der nebeneinander verlaufende Nuten (31), in denen die Fasern (21) angeordnet und befestigt sind, so daß die Stirnflächen (210) der Fasern gleich orientiert in einer zu dieser Oberfläche senkrechten gemeinsamen Ebene (22) auf einer zu dieser Oberfläche parallelen geraden Linie (220) nebeneinander angeordnet sind, und
- einer zu dieser Oberfläche parallelen Lagerfläche (33), die sich vor den Stirnflächen (210) befindet und zum Anordnen des Bausteins (1) derart vorhanden ist, daß dessen Auflagefläche (13) flach auf der Lagerfläche (33) aufliegt und dessen Endfläche (12) der Ebene (22), in der die Stirnflächen (210) angeordnet sind, parallel gegenüberliegt, wobei die Stirnflächen (210) der Fasern (21) und die Ein- und/oder Ausgänge (11) des Bausteins (1) auf gleicher Höhe liegen,
**dadurch gekennzeichnet, daß**
- in der Oberfläche des Trägerkörpers (3) ein die Nuten (31) quer durchtrennender Graben (50) zum Einbringen eines Klebstoffs (60) zum Befestigen der Fasern (21) in den Nuten (31) ausgebildet ist, der sich von dieser Oberfläche in eine größere Tiefe als die Nuten (31) erstreckt,
- die Fasern (21) auf beiden Seiten des Grabens (50) in der jeweiligen Nut (31) aufliegen.

2. Koppelanordnung nach Anspruch 1, wobei die Lagerfläche (33) zwei durch eine Vertiefung (36) des Trägerkörpers (3) voneinander getrennte Lagerflächenabschnitte (330), die einander gegenüberliegenden Endflächen (12) des Bausteins (1) zugeordnet sind, aufweist, wobei ein an eine Endfläche (12) grenzender Abschnitt der Auflagefläche (13) des Bausteins (1) flach auf einem Lagerflächenabschnitt (330) und ein an die gegenüberliegende Endfläche (12) grenzender Abschnitt der Auflagefläche (13) flach auf dem anderen Lagerflächenabschnitt (330) aufliegt.

3. Koppelanordnung nach Anspruch 1 oder 2, mit einer Anschlageinrichtung (311, 131; 611, 131), die eine seitliche Begrenzungsfläche (311; 611) einer in der Lagerfläche (33) ausgebildeten Aussparung (31; 61) und einen auf der Auflagefläche (13) des Bausteins (1) ausgebildeten und in dieser Aussparung (31; 61) angeordneten Vorsprung (131) aufweist, wobei die Begrenzungsfläche (311; 611) und der Vorsprung (131) durch relatives Verschieben zur Begrenzung einer relativen Verschiebung zwischen dem Baustein (1) und Trägerkörper (3) in einen Kontakt mit einander zu bringen sind, bei dem die Stirnflächen (210) der Fasern (21) und die Ein- und/oder Ausgänge (11) des Bausteins (1) individuell einander gegenüberliegen und jeweils zueinander zentriert sind.

4. Koppelanordnung nach Anspruch 3, wobei die Aussparung (31, 61) der Anschlageinrichtung (311, 131; 611, 131) aus einer Nut (31, 61) mit einer schräg in einem Winkel zur Lagerfläche (33) angeordneten seitlichen Begrenzungsfläche (311, 611) besteht, und daß diese Begrenzungsfläche (311, 611) und der Vorsprung (131) der Anschlageinrichtung (311, 131; 611, 131) durch relatives Verschieben von Baustein (1) und Trägerkörper (3) in Richtung der geraden Linie (120, 220) der Ein- und/oder Ausgänge (11) und Stirnflächen (210) in den Kontakt miteinander bringbar sind, bei dem die Stirnflächen (210) der Fasern (21) und die Ein- und/oder Ausgänge (11) des Bausteins (1) individuell einander gegenüberliegen und jeweils zueinander zentriert sind.

5. Koppelanordnung nach einem der vorhergehenden Ansprüche, wobei die Fasern (21) in Nuten (41) eines Hilfsträgerkörpers (4) angeordnet und befestigt sind, die in einer ebenen Oberfläche (43) des Hilfsträgerkörpers (4) derart ausgebildet und bemessen sind, daß die in diesen Nuten (41) angeordneten Fasern (21) mit ihrer Umfangsfläche (212) seitliche Begrenzungsflächen (411) dieser Nuten (41) berühren und aus der ebenen Oberfläche (43) des Hilfsträgerkörpers (4) ragen, wobei die Nuten (41) des Hilfsträgerkörpers (4) mit den in einer Ebene angeordneten Nuten (31) des Trägerkörpers (3) derart zur Deckung bringbar sind, daß jede Faser (21) in einer zugeordneten Nut (31) des Trägerkörpers (3) mit ihrer Umfangsfläche (212) in diese Nut (31) ragt und die seitlichen Begrenzungsflächen (311) dieser Nut (31) berührt.

6. Koppelanordnung nach einem der vorhergehenden Ansprüche, wobei eine Nut (31, 41, 61) schräg in einem Winkel zueinander angeordnete sich gegenüberliegende seitliche Begrenzungsflächen (311, 411, 611) aufweist.

7. Koppelanordnung nach einem der vorhergehenden Ansprüche, wobei der Trägerkörper (3) im Bereich des Bausteins (1) eine sich bis zu einer vom Baustein (1) abgekehrten Rückseite (34) des Trägerkörpers (3) erstreckende durchgehende Öffnung (37) aufweist, durch die der Baustein (1) von dieser Rückseite (34) her elektrisch kontaktierbar ist.

8. Koppelanordnung nach einem der vorhergehenden Ansprüche, wobei der Graben (50) ein durch Sägen erzeugter Graben ist.

9. Koppelanordnung nach einem der vorhergehenden Ansprüche, wobei in der Oberfläche des Trägerkörpers (3) und/oder Hilfsträgerkörpers (4) zumindest ein sich zwischen benachbarten Nuten (31, 41) und quer zum Graben (50) erstreckender weiterer Graben (51) ausgebildet ist, in den der eine Graben (50) mündet und der sich von der Oberfläche (33, 43) in eine größere Tiefe als dieser eine Graben (50) erstreckt.

10. Koppelanordnung nach Anspruch 9, wobei der weitere Graben (51) in Form einer Nut mit schräg in einem Winkel zueinander angeordneten sich gegenüberliegenden seitlichen Begrenzungsflächen (511) ausgebildet ist.

11. Koppelanordnung nach einem der vorhergehenden Ansprüche, wobei in der Oberfläche des Trägerkörpers (3) und/oder Hilfsträgerkörpers (4) eine sich quer zu den Nuten (31, 41) erstreckende wannenartige Vertiefung (32) zur Aufnahme und Befestigung von mit einem Schutzmantel (25) ummantelten Fasern (21), der im Bereich der Nuten (31, 41) von den Fasern (31, 41) entfernt ist, ausgebildet ist.

12. Koppelanordnung nach einem der vorhergehenden Ansprüche, wobei eine Nut (31, 41), in der eine Faser (21) anzuordnen und zu befestigen ist, aus zwei oder mehreren in einer bestimmten Richtung (r) ausgerichteten und in dieser Richtung (r) aufeinanderfolgend und seitlich parallel gegeneinander versetzt angeordneten Nutabschnitten (31₁, 31₂, 31₃) besteht, die auf einer in einem Winkel (α) zur bestimmten Richtung (r) verlaufenden geraden Linie (38) angeordnet sind.

13. Koppelanordnung nach Anspruch 12, wobei benachbarte Nutabschnitte (31₁, 31₂; 31₂, 31₃) durch eine grabenartige Vertiefung (39) voneinander getrennt sind.

14. Koppelanordnung nach Anspruch 13, wobei eine grabenartige Vertiefung (39) aus einem durch Sägen erzeugten Graben besteht.

## Claims

1. Coupling arrangement for optically coupling together in self-aligning fashion optical inputs and/or outputs (11) of an OEIC module (1) and end faces (210) of optical fibres (21), in which the inputs and/or outputs (11) of the module (1) are arranged next to one another in a plane end surface (12) of this module (1) on a straight line (120), and the module (1) has a support surface (13) which is perpendicular to the end surface (12) of the module and parallel to the straight line (120) on which the inputs and/or outputs (11) of the module (1) are arranged, the arrangement having
- a holder (3, 4) with
- a plane surface in grooves (31) which run next to one another and in which the fibres (21) are arranged and fastened such that the end faces (210) of the fibres are arranged next to one another identically orientated on a straight line (220), parallel to this surface, in a common plane (22) perpendicular to this surface, and
- a bearing surface (33) which is parallel to this surface, is located in front of the end faces (210) and is present for the purpose of arranging the module (1) in such a way that the support surface (13) of said module is supported flat on the bearing surface (33) and its end surface (12) is situated parallel to the plane (22) in which the end faces (210) are arranged, the end faces (210) of the fibres (21) and the inputs and/or outputs (11) of the module (1) being situated at the same level,
**characterized in that**
- there is constructed in the surface of the holder (3) a trench (50) which transversely severs the grooves (31), serves for introducing an adhesive (60) for fastening the fibres (21) in the grooves (31) and extends from this surface to a greater depth than the grooves (31), and
- the fibres (21) are supported on both sides of the trench (50) in the respective groove (31).

2. Coupling arrangement according to Claim 1, in which the bearing surface (33) has two bearing surface sections (330), which are separated from one another by a depression (36) in the holder (3) and are assigned to mutually opposite end surfaces (12) of the module (1), one section, bordering one end surface (12), of the support surface (13) of the module (1) being supported flat on one bearing surface section (330), and one section, bordering on the opposite end surface (12), of the support surface (13) being supported flat on the other bearing surface section (330).

3. Coupling arrangement according to Claim 1 or 2, having a stopping device (311, 131; 611, 131) which has a lateral limiting surface (311; 611) of a cutout (31; 61) formed in the bearing surface (33), and a projection (131) formed on the support surface (13) of the module (1) and arranged in this cutout (31; 61), the intention being for the limiting surface (311; 611) and the projection (131) to be brought into contact with one another by relative displacement in order to limit a relative displacement between the module (1) and holder (3), in the case of which contact the end faces (210) of the fibres (21) and the inputs and/or outputs (11) of the module (1) are individually opposite one another and in each case centred relative to one another.

4. Coupling arrangement according to Claim 3, in which the cutout (31, 61) of the stopping device (311, 131; 611, 131) comprising a groove (31, 61) with a lateral limiting surface (311, 611) arranged obliquely at an angle to the bearing surface (33), and in that this limiting surface (311, 611) and the projection (131) of the stopping device (311, 131; 611, 131) can be brought into contact with one another by relative displacement of the module (1) and holder (3) in the direction of the straight line (120, 220) of the inputs and/or outputs (11) and end faces (210), in the case of which contact the end faces (210) of the fibres (21) and the inputs and/or outputs (11) of the module (1) are individually opposite one another and in each case centred relative to one another.

5. Coupling arrangement according to one of the preceding claims, in which the fibres (21) are arranged and fastened in grooves (41) of an auxiliary holder (4), which are constructed and dimensioned in a plane surface (43) of the auxiliary holder (4) such that the fibres (21) arranged in said grooves (41) touch with their circumferential surface (212) lateral limiting surfaces (411) of said grooves (41) and project from the flat surface (43) of the auxiliary holder (4), and in which the grooves (41) of the auxiliary holder (4) can be brought into coincidence with the grooves (31), arranged in a plane, of the holder (3) in such a way that each fibre (21) in an assigned groove (31) of the holder (3) projects with its circumferential surface (212) into said groove (31) and touches the lateral limiting surfaces (311) of said groove (31).

6. Coupling arrangement according to one of the preceding claims, in which a groove (31, 41, 61) has mutually opposite lateral limiting surfaces (311, 411, 611) arranged obliquely at an angle to one another.

7. Coupling arrangement according to one of the preceding claims, in which in the region of the module (1) the holder (3) has a continuous opening (37) which extends up to a rear side (34), averted from the module (1), of the holder (3) and through which the module (1) can be electrically contacted from said rear side (34).

8. Coupling arrangement according to one of the preceding claims, in which the trench (50) is a trench produced by sawing.

9. Coupling arrangement according to one of the preceding claims, in which there is constructed in the surface of the holder (3) and/or auxiliary holder (4) at least one further trench (51) which extends between neighbouring grooves (31, 41) and transverse to the trench (50), into which one trench (50) opens and which extends from the surface (33, 43) to a greater depth than said one trench (50).

10. Coupling arrangement according to Claim 9, in which the further trench (51) is constructed in the form of a groove having mutually opposite lateral limiting surfaces (511) arranged obliquely at an angle to one another.

11. Coupling arrangement according to one of the preceding claims, in which there is constructed in the surface of the holder (3) and/or auxiliary holder (4) a trough-like depression (32) extending transverse to the grooves (31, 41), for receiving and fastening fibres (21) clad with a protective cladding (25) which is removed from the fibres (31, 41) in the region of the grooves (31, 41).

12. Coupling arrangement according to one of the preceding claims, in which a groove (31, 41), in which a fibre (21) is to be arranged and to be fastened, comprises two or more groove sections (31₁, 31₂, 31₃) which are arranged in a specific direction (r) and succeed one another in this direction (r) and are laterally offset in parallel with respect to one another and are arranged on a straight line (38) extending at an angle (α) to the specific direction (r).

13. Coupling arrangement according to Claim 12, in which neighbouring groove sections (31₁, 31₂; 31₂ 31₃) are separated from one another by a trench-like depression (39).

14. Coupling arrangement according to Claim 13, in which a trench-like depression (39) comprises a trench produced by sawing.

## Revendications

1. Coupleur pour le couplage optique autoaligné d'entrées et/ou de sorties (11) optiques d'un module (1) OEIC et de surfaces (210) frontales de fibres (21) optiques, les entrées et/ou sorties (11) du module (1) étant disposées côte à côte sur une ligne (120) droite dans une surface (12) d'extrémité plane de ce module (1), et le module (1) comportant une surface (13) d'appui qui est perpendiculaire à la surface (12) d'extrémité du module (1) et qui est parallèle à la ligne (120) droite sur laquelle sont disposées les entrées et/ou sorties (11) du module (1), le coupleur comportant une pièce (3, 4) support ayant
- une surface plane dans laquelle sont ménagées des gorges (31), qui s'étendent les unes à côté des autres et dans lesquelles sont disposées et fixées les fibres (21) de façon que les surfaces (210) frontales des fibres soient disposées en ayant la même orientation dans un plan (22) commun perpendiculaire à cette surface sur une ligne (220) droite parallèle à cette surface, et
- une surface (33) de support, qui est parallèle à cette surface, qui se trouve devant les surfaces (210) frontales et qui est présente pour disposer le module (1) de façon que sa surface (13) d'appui s'applique à plat sur la surface (33) de support et dont la surface (12) d'extrémité est opposée parallèlement au plan (22) dans lequel sont disposées les surfaces (210) frontales, les surfaces (210) frontales des fibres (21) et les entrées et/ou sorties (11) du module étant au même niveau,
**caractérisé en ce que**
- il est constitué dans la surface de la pièce (3) support un sillon (50) coupant transversalement les gorges (31) et destiné à l'introduction d'une colle (60) de fixation des fibres (21) dans les gorges (31), sillon qui s'étend à partir de cette surface en une plus grande profondeur que les gorges (31),
- les fibres (21) s'appliquent des deux côtés du sillon (50) dans la gorge (31) respective.

2. Coupleur suivant la revendication 1, dans lequel la surface (33) de support comporte deux tronçons (330) de surface de support séparés l'un de l'autre par une cavité (36) de la pièce (3) de support et associés à des surfaces (12) d'extrémité mutuellement opposées du module (1), un tronçon de la surface (13) d'appui du module (1), adjacent à une surface (12) d'extrémité étant appliqué à plat sur un tronçon (330) de la surface de support et un tronçon de la surface (13) d'appui adjacent à la surface (12) d'extrémité opposée étant appliqué à plat sur l'autre tronçon (330) de la surface d'appui.

3. Coupleur suivant la revendication 1 ou 2, comprenant un dispositif (311, 131 ; 611, 131) de butée, qui comporte une surface (311 ; 611) latérale de délimitation d'une cavité (31 ; 61) constituée dans la surface (33) de support et une saillie (131) constituée sur la surface (13) d'appui du module (1) et disposée dans cette cavité (31 ; 61), la surface (311 ; 611) de délimitation et la saillie (131) pouvant être mises en contact l'une avec l'autre par un déplacement relatif en vue de limiter un déplacement relatif entre le module (1) et la pièce (3) support, dans lequel les surfaces (210) frontales des fibres (21) et les entrées et/ou sorties (11) du module (1) sont opposées individuellement les unes et les autres et sont centrées respectivement les unes par rapport aux autres.

4. Coupleur suivant la revendication 3, dans lequel l'évidement (31, 61) du dispositif (311, 131 ; 611, 131) de butée est constitué d'une gorge ayant une surface (311, 611) latérale de délimitation inclinée suivant un angle par rapport à la surface (33) de support, et en ce que cette surface (311, 611) de délimitation et la saillie (131) du dispositif (311, 131 ; 611, 131) de butée peuvent être mises en contact mutuel par déplacement relatif du module (1) et de la pièce (3) support dans la direction de la ligne (120, 220) droite des entrées et/ou sorties (11) et des surfaces (210) frontales, dans lequel les surfaces (210) frontales des fibres (21) et les entrées et/ou sorties (11) du module (1) sont opposées individuellement les unes aux autres et sont centrées respectivement les unes par rapport aux autres.

5. Coupleur suivant l'une des revendications précédentes, dans lequel les fibres (21) sont disposées et fixées dans des gorges (41) d'une pièce (4) support auxiliaire, qui sont constituées dans une surface (43) plane de la pièce (4) support auxiliaire et qui ont des dimensions telles que les fibres (21) disposées dans ces gorges (41) touchent par leurs surfaces (212) périphériques les surfaces (411) latérales de délimitation de ces gorges (41) et font saillie de la surface (43) plane de la pièce (4) support auxiliaire, les gorges (41) de la pièce (4) support auxiliaire pouvant être mises en coïncidence avec les gorges (33) de la pièce (3) support qui sont disposées dans un plan, de façon que chaque fibre (21) se trouvant dans une gorge (31) associée de la pièce (3) support pénètre par sa surface (212) périphérique dans cette gorge (31) et touche les surfaces (311) latérales de délimitation de cette gorge (31).

6. Coupleur suivant l'une des revendications précédentes, dans lequel une gorge (31, 41, 61) comporte des surfaces (311, 411, 611) latérales de délimitation opposées et inclinées suivant un angle les unes par rapport aux autres.

7. Coupleur suivant l'une des revendications précédentes, dans lequel la pièce (3) support comporte, dans la région du module (1), une ouverture (37) continue s'étendant jusqu'à une face (34) arrière de la pièce (3) support qui est éloignée du module (1), ouverture par laquelle le module (1) peut être mis en contact électrique par cette face (34) arrière.

8. Coupleur suivant l'une des revendications précédentes, dans lequel le sillon (50) est un sillon produit par sciage.

9. Coupleur suivant l'une des revendications précédentes, dans lequel, dans la surface de la pièce (3) support et/ou de la pièce (4) support auxiliaire, il est constitué au moins un autre sillon (51) s'étendant entre deux gorges (31, 41) voisines et transversalement au sillon (50), sillon (51) dans lequel l'un des sillons (50) débouche et qui s'étend, à partir de la surface (33, 43), à une profondeur plus grande que ce dit un sillon (50).

10. Coupleur suivant la revendication 9, dans lequel l'autre sillon (51) a la forme d'une gorge ayant des surfaces (511) latérales de délimitation mutuellement opposées et inclinées suivant un angle les unes par rapport aux autres.

11. Coupleur suivant l'une des revendications précédentes, dans lequel, dans la surface de la pièce (3) support et/ou de la pièce (4) support auxiliaire, il est prévu une cavité (32) en forme de cuvette s'étendant transversalement aux gorges (31, 41) et destinée à recevoir et à fixer des fibres (21) enveloppées d'une enveloppe (25) de protection qui a été enlevée des fibres (21) dans la région des gorges (31, 41).

12. Coupleur suivant l'une des revendications précédentes, dans lequel une gorge (31, 41), dans laquelle une fibre (21) doit être disposée et doit être fixée, est constituée de deux ou de plusieurs tronçons (31₁, 31₂, 31₃) de gorge, dirigés dans une direction (r) déterminée et se succédant dans cette direction (r) et décalés latéralement en étant parallèles les uns aux autres, tronçons qui sont disposés sur une ligne (38) droite s'étendant en faisant un angle (α) avec la direction (r) déterminée.

13. Coupleur suivant la revendication 12, dans lequel des tronçons (31₁, 31₂ ; 31₂, 31₃) voisins de gorge sont séparés l'un de l'autre par une cavité (39) en forme de sillon.

14. Coupleur suivant la revendication 13, dans lequel une cavité (39) en forme de sillon est constituée d'un sillon produit par sciage.
